# EUROPEAN PATENT SPECIFICATION

(11) **EP 1 677 936 B1**
(45) Date of publication and mention of the grant of the patent: **02.03.2011**
(21) Application number: 04795236.1
(22) Date of filing: 15.10.2004
(51) Int. Cl.: B23D 49/16, B25F 5/02

(54) **SCROLL COLLAR FOR RECIPROCATING SAW**
DREHBUND FÜR HUBSÄGE
BAGUE DE DEFILEMENT DE SCIE SAUTEUSE

(30) Priority: 29.10.2003 US 696643
(43) Date of publication of application: 12.07.2006
(73) Proprietor: Credo Technology Corporation, Broadview, Illinois 60155 (US)
(72) Inventor: MICHEL, Timothy, P., Naperville, IL 60563 (US); BENNAGE, Walter, Summerville, SC 29485 (US); SUN, Daeroon, Suzhou 215006 (CN)
(74) Representative: Peckmann, Ralf
(86) International application number: PCT/US2004/034049
(87) International publication number: WO 2005/044494

(56) References cited:
- US-A- 3 795 980
- US-A1- 2003 110 645

## Description

### BACKGROUND ART

The present invention relates to a reciprocating tool assembly according to the preamble of claim 1. Such a reciprocating tool assembly is known from US 2003/0110645 A1.

Hand-held reciprocating saws, like other reciprocating motion tools such as the jigsaw, are used for cutting a variety of objects such as wood, drywall and metal pipes. Because such hand-held reciprocating saws are generally more maneuverable than table saws and circular saws, they are frequently used for cutting curves. Cutting curves, or scroll cutting, requires both movement of the tool over the plane of the object, for example in the "X" or "Y" direction on a flat board, but also rotation of the tool about the "Z" axis. Rotation of the tool body changes the angular orientation of the blade relative to the object being cut, and in tandem with moving the tool over the plane of the object, a curved cut results. The various motions imparted on the tool by the user typically require two-handed operation of the tool.

Reciprocating saws in which two hands are required for use of the tool are well known in the art. One grasping surface is typically located at the back handle for directing, rotating and holding the weight of the tool, while a second grasping surface is typically located toward the working end of the tool for fine direction of the tool. One example of such a reciprocating saw is disclosed in U.S. Patent No. 6,234,255 issued to Feldmann et al.

To cut a curve with the prior art tools, the hand on the back handle rotates the tool body requiring the hand at the working end to also rotate or loosely hold the working end so that it can be rotated. An uncomfortable or awkward grip position can result which may cause the user to re-adjust his/her grip at the working end. The disadvantage of hand re-adjustment is that it can compromise the cut being made, particularly when a non-uniform gripping surface is provided on the tool. The user may even have to interrupt the cutting process to re-adjust his/her hand grip, potentially causing the cut to be imperfect in its appearance.

While Feldmann et al. disclose a reciprocating saw with a generally circular, uniform gripping surface at the working end of the tool, the problem of hand readjustment is not eliminated. The curvature of the gripping surface in Feldmann et al. merely makes hand adjustment easier because angles on the gripping surface do not have to be negotiated. However, re-adjustment of the grip is still required while the tool is used for scroll cutting.

Accordingly, there is a need for a reciprocating saw which incorporates an improved grip for tool rotation.

### DISCLOSURE OF INVENTION

To attain the above and other objects, the present invention provides a reciprocating tool assembly having the features of claim 1. Further advantageous embodiments are defined by the dependent claims 2-22.

### BRIEF DESCRIPTION OF THE DRAWINGS

FIGURE 1 is a top view of a reciprocating saw incorporating the present invention;
FIG. 2 is a side view of the reciprocating saw of FIG. 1;
FIG. 3 is a cross sectional view taken generally along line 3-3 of FIG. 1; and
FIG. 4 is a cross sectional view taken generally along line 4-4 of FIG. 2.

### BEST MODE OF CARRYING OUT THE INVENTION

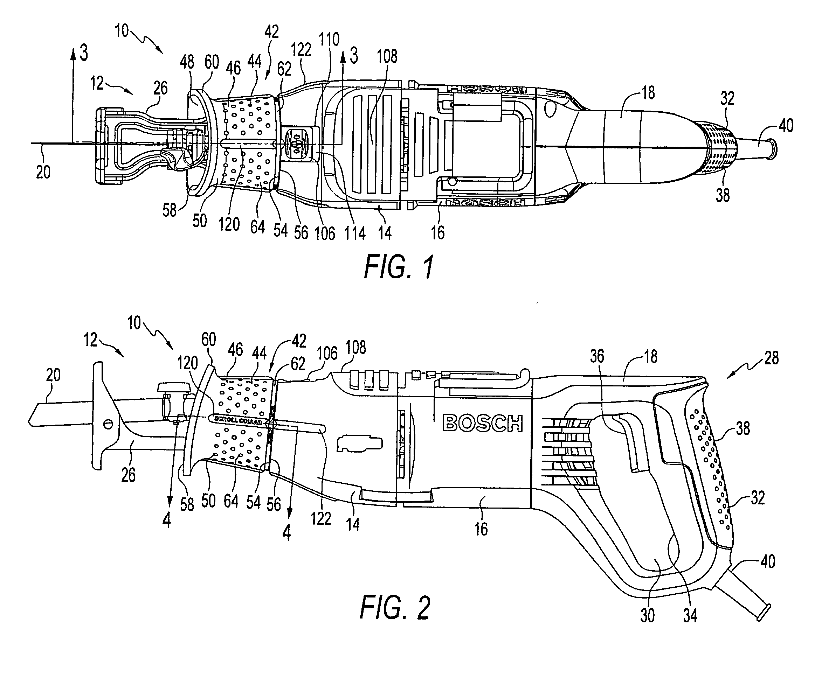

A preferred embodiment of the present invention is shown in FIGS. 1-4 and comprises a motorized reciprocating saw, indicated generally at 10, and has a working end, indicated generally at 12, a gear housing 14, a motor housing 16 and a back handle 18. While the saw 10 is illustrated, other types of known reciprocating tools or tools requiring two-handed operation are contemplated. In the saw 10 as illustrated, the working end 12 includes a saw blade 20 disposed at the end of a plunger 22 which reciprocates along a plunger axis 24. The saw blade 20, in turn, reciprocates between and beyond portions of a saw foot 26, as is known in the art.

The back handle 18 is disposed at the end opposite of the working end 12 and is configured for gripping the tool, directing the orientation or movement of the tool, and rotating the tool, all movements required in scroll cutting. In the present illustrated embodiment, the back handle 18, the gear housing 14 and the motor housing 16 do not move relative to each other. The back handle 18 includes a trigger structure 28 having a handle aperture 30, although other configurations are contemplated. The trigger structure 28 is generally perpendicular to the tool motor housing 16, but may also have various inclinations to be ergonomical and to accommodate comfortable placement of a user's first hand. The handle opening 30 allows the user to place his/her first hand at a back surface 32 of the handle and wrap his/her fingers around an inside surface 34 of the handle to more securely grasp the saw 10, as is known in the art.

The saw 10 is turned on by pressing a trigger switch 36 located on the inside surface 34 of the opening. On the back surface 32 of the back handle 18, a gripping material 38, such as a rubber or plastic overmold, may be provided for contacting the palm comfortably, preventing slippage from the hand, and insulating the hand from heat generated by the tool. In the corded variety of reciprocating saws, a cord 40 exits from the back surface 32 of the handle remote from where the hand is placed so as not to interfere with gripping or operation of the saw 10.

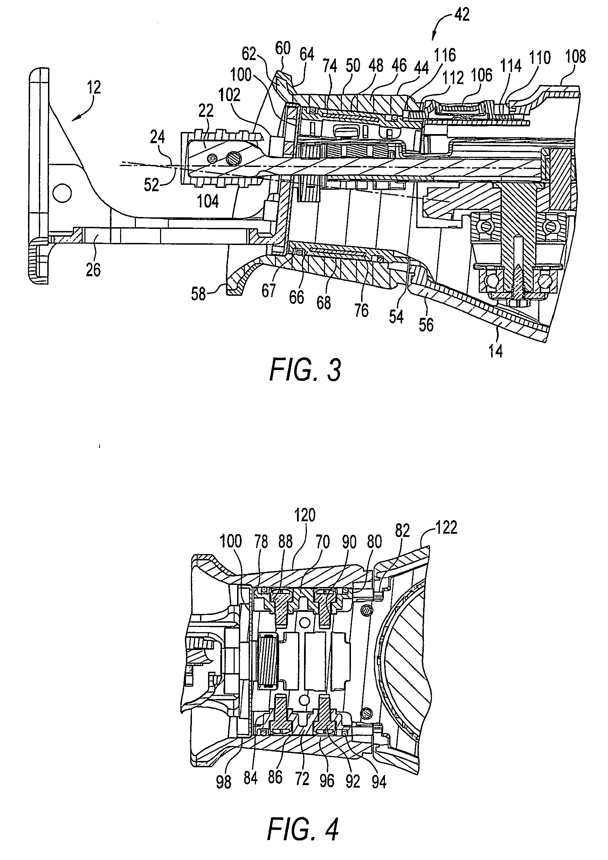

A front gripping portion, indicated generally at 42, is located between the working end 12 and the gear housing 14 and is provided with a scroll collar 44 for placement of a user's second hand. The scroll collar 44 includes a generally cylindrical member 46 having an inner surface 48 and an outer surface 50, the scroll collar 44 also being rotatable about a scroll collar axis 52 (See FIG. 3). Since the scroll collar 44 can rotate with respect to the tool, when the tool itself is rotated, such as during the scroll cutting process, the hand grip on the scroll collar 44 can remain static with respect to the user or to the object being cut, or can rotate as the user dictates. This enables the user to cut a curve without having to readjust or release the grip on the tool.

The scroll collar axis 52 is closely parallel to the plunger axis 24. The close alignment of the scroll collar axis 52 and the plunger axis 24, allows the fine direction of the tool with the second hand since only a single tool axis needs to be negotiated. Although the scroll collar axis 52 is slightly offset relative to the plunger axis 24, it is designed such that a inner edge 54 of the scroll collar 44 is always flush with an adjacent gear housing overmold 56 as the collar is rotated from 0-360 degrees. This configuration prevents dust or other particles from entering the gear housing 14 and creates a generally sleek exterior of the saw 10.

The diameter of the scroll collar 44 at an outer edge 58 is larger than the diameter at its inner edge 54, the outer edge having an outwardly flaring lip 60 which prevents hand movement toward the working end 12. The shape of the scroll collar 44 and lip 60, extending further towards the working end 12 at the saw foot 26 than the blade, facilitates the changing of saw blades 20 as well as accommodating the thicker width of the hand at the palm.

Referring now to FIGS. 3 and 4, the scroll collar 44 preferably includes a base 62 and an external gripping surface 64 having the same generally cylindrical shape. The base 62 is preferably made of PA6 GF30%, a glass filled nylon, but other materials which provide wear resistance and high temperature capability such as some thermoset polymers, are contemplated. The base 62 preferably defines the inner surface 48, has a generally thin material thickness, and is configured to slide over a support structure 66. The external gripping surface 64, preferably made of overmolded rubber, is outwardly disposed over the base 62 to preferably define the outer surface 50, and to improve the scroll collar 44 grip. The external gripping surface 64 may be in one or more sections disposed on the base. Further, the external gripping surface 64 insulates the second hand from heat generated by the tool.

Creating a circular interface on which the scroll collar 44 rotates, a support structure 66 including a first collar support 70 and a second collar support 72 is provided. Each of the first and second collar supports 70, 72 are preferably cylindrical, spanning approximately 180-degrees around the gear housing 14, and joining at an upper joint 74 and a lower joint 76. The first and second collar supports 70, 72 preferably matingly engage such as in a tongue and groove configuration, but other methods of joining the supports are contemplated, such as abutting, pressure fitting, or fastening to each other.

Each of the first and second collar supports 70, 72 has a working edge 78 and a housing edge 80. The working edge 78 is generally smooth and uniform, while the housing edge 80 has an attachment structure 82, such as outwardly locating projections, to engage corresponding structure in the gear housing 14. The locating projections position and secure the first and second supports 70, 72 relative to the gear housing 14.

In the preferred embodiment, the first and second collar supports 70, 72 have an inner surface 84 and an outer surface 86. The inner surface 84 is generally cylindrical except where the collar supports are fastened to the gear housing 14. At these locations, the inner surface 84 protrudes inwardly in a step-like fashion to form at least one, but preferably two counterbores 88 radially facing the scroll collar axis 52. The counterbores 88 may be integrally formed with or otherwise attached to the supports 70, 72.

Each counterbore 88 has a hole 90, preferably threaded, which extends to the outer surface 50 of the scroll support for the introduction of a screw 92 or other fastener through each support 70, 72. The screw 92 is introduced from the outer surface 86 of each support 70, 72 and protrudes through the hole 90 to attach the support to the adjacent, inwardly located gear housing 14. The first and second collar supports 70, 72 are preferably axially displaced an equal distance from the scroll collar axis 52, but other locations of the first and second supports are contemplated.

Other collar support structures 66 are contemplated such as one continuous cylindrical support, any additional number of individual supports as described above, or any other structure creating a generally circular interface 68 on which the scroll collar 44 can rotate and which can be attached to the gear housing 14. Additionally, the first and second scroll supports 70, 72 may be made of PA6 GF30%, a thermoset polymer, or any other rigid material which will provide wear resistance and high temperature capability. Alternatively, the support structure 66 could be eliminated if the gear housing 14 itself provided a generally circular interface 68 upon which the collar could rotate.

A resistance structure 94 is disposed on top of the support structure 66 to provide small rotational resistance to the scroll collar 44 as well as eliminate radial movement between the scroll collar 44 and the first and second collar supports 70, 72 due to tolerance stack-up. In the preferred embodiment, the resistance structure 94 comprises at least one, and preferably two O-rings, typically made of rubber. The outer surface 86 of the support structure 66 is provided with at least one and preferably two grooves 67 for accommodating the O-rings, forming concentric rings sandwiched between the support structure 66 and the scroll collar 44. Alternatively, a metal tolerance ring, such as those used frequently in ball bearing applications, may also be used in place of an O-ring.

After assembling the support structure 66 to the gear housing 14, and the resistance structure 94 to the support structure 66, the scroll collar 44 can be introduced over the support structure and resistance structure. The inner surface 48 of the collar has a region of increased thickness 96 and a tapered region 98. The scroll collar 44 is positioned over the support structure 66 such that the first edge 54 of the collar is flush with the gear housing overmold 56, and further, such that the tapered region 98 is aligned with the end of the gear housing 14.

A retaining member, preferably an end plate 100, is disposed adjacent the support structure 66 towards the working end 12 of the saw 10 and abuts the tapered region 98. Secured to the gear housing 14 with at least one, and preferably two screws 102, the end plate 100 prevents the scroll collar 44 from sliding off the working end 12 of the tool. The end plate 100 is preferably formed of a single, unitary metal plate of a generally thin material thickness, and is further provided with a hole 104 through which the plunger 22 can reciprocate. In this embodiment, the screws 102 used to secure the end plate 100 to the gear housing 14 are additionally used to secure the saw foot 26 to the gear housing, but it is also contemplated that the end plate may provide a hole for the saw foot 26 to extend through so that it can be directly secured to the gear housing 14. Alternatively, other retaining members 100 used to maintain the axial position of the scroll collar 44 are contemplated, such as a ring member or formations on the gear housing 14.

Referring now to FIGS. 1-3, a lock 106 is disposed on the gear housing 14 preferably at a tool top surface 108, and is slidably disposed in a housing detent 110. The lock 106, when placed in a forward position prevents rotation of the scroll collar 44, and when placed in a rearward position, enables the scroll collar 44 to rotate freely. In the detent 110, the lock 106 is preferably curved with the curvature of the tool and has a forward arc-shaped tab 112 and a rearward arc-shaped tab 114. The lock 106 slides axially toward the working end 12 and the forward tab 112 engages at least one receiving slot 116 in the collar. In engagement with the receiving slot 116, the forward tab 112 prevents rotation of the collar while the rearward tab 114 maintains the lock 106 in the detent 110. Out of engagement with the receiving slot 116, the lock 106 slides backward in the detent 110 so that the front tab is completely disengaged from the receiving slot 116 and the rearward tab 114 is maintained in a back end 118 of the detent 110 under the housing.

Referring to FIG. 1, the scroll collar 44 also has at least one, and preferably multiple markers, such as exterior ridges 120 which are each associated with and in radial alignment with the receiving slot(s) 116 in the collar. That is, each exterior ridge 120 is radially aligned with each receiving slot 116 so that the user is alerted to the location of each receiving slot 116. In the preferred embodiment, both the receiving slots 116 and the associated exterior ridges 120 are formed from the base 62 of the scroll collar 44, but other markers such as indentations and paint marks are contemplated. Additionally, the gear housing 14 has at least one, but preferably an equal amount of overmold markers, such as overmold ridges 122.

When the exterior ridges 120 are equally spaced, and further, when at least one exterior ridge is lined up with at least one overmold ridge 122, one of the receiving slots 116 in the collar is aligned with the lock 106 such that the forward tab 112 can engage the receiving slot 116. In the preferred embodiment, four exterior ridges 120 and four receiving slots 116 are equally spaced and radially aligned to enable the scroll collar 44 to be locked at 90-degree increments when any exterior ridge 120 is aligned with any overmold ridge 122. Further, because the first scroll edge is always flush with the gear housing 14 overmold, the forward tab 112 of the lock 106 will consistently engage every receiving slot 116 irrespective of the rotation of the collar.

While particular embodiments of a scroll collar 44 on a reciprocating saw have been shown and described, it will be appreciated by those in the art that changes and modifications may be made thereto without departing from the invention in its broader aspects and as set forth in the following claims.

## Claims

1. A reciprocating tool assembly providing a rotating grip, comprising:
a scroll collar (44);
a reciprocating tool (10) having a housing (14, 16) and a working end (12) to which a reciprocating tool blade is attached;
the reciprocating tool assembly being **characterized by**:
a support structure (66) on said housing (14, 16) adjacent said working end (12); and
a generally cylindrical scroll collar (44) carried by said support structure (66) and configured to rotate relative to said support structure (66) and the attached reciprocating tool blade around a scroll collar axis (52).

2. The assembly of claim 1 wherein the reciprocating tool (10) is a saw.

3. The assembly of claim 1 wherein said support structure (66) is a structure attached to said housing (14, 16) having a generally circular interface.

4. The assembly of claim 3 wherein said support structure (66) has a first collar support (70) and a second collar support (72) each extending approximately 180-degrees and including a counterbore for receiving a fastener (92).

5. The assembly of claim 1 further including a resistance structure disposed between said support structure (66) and said scroll collar (44).

6. The assembly of claim 5 wherein said resistance structure is at least one O-ring.

7. The assembly of claim 1 further including a retaining member (100) located adjacent to said scroll collar (44) for retaining said scroll collar (44) on said support structure (66).

8. The assembly of claim 7 wherein said retaining member (100) is an endplate attached generally perpendicular to said scroll collar (44) axis.

9. The assembly of claim 1 wherein said scroll collar (44) includes a base for engaging the support structure (66) and an overmold disposed on said base.

10. The assembly of claim 1 further including a lock for restricting rotation of the scroll collar (44) about the scroll collar (44) axis.

11. The assembly of claim 10 wherein said lock is axially and slidingly disposed in a detent on the reciprocating tool (10) and includes a forward tab configured to be engaged with at least one receiving slot on said collar.

12. The assembly of claim 11 further including a marker on said collar for aligning the at least one receiving slot and said forward tab.

13. The assembly of claim 1 wherein said housing (14, 16) further comprising:
a motor housing (16);
a gear housing (14); and
said support structure (66) configured for attachment to the gear housing (14); and
said scroll collar (44) configured to slidingly engage said support structure (66).

14. The assembly of claim 13 wherein said support structure (66) has a generally circular interface.

15. The assembly of claim 14 wherein said support structure (66) has a first collar support (70) and a second collar support (72) each extending approximately 180-degrees and including a counterbore for receiving a fastener (92).

16. The assembly of claim 13 further including a resistance structure (94) disposed between said support structure (66) and said scroll collar (44).

17. The assembly of claim 13 further including a retaining member (100) located adjacent to said scroll collar (44) for retaining said scroll collar (44) on said support structure (66).

18. The assembly of claim 13 wherein said scroll collar (44) includes a base for engaging the support structure (66) and an overmold disposed on said base.

19. The assembly of claim 1, wherein said housing (14, 16) further comprising:
a motor housing (16);
a gear housing (14) disposed adjacent to said motor housing (16) and said working end (12) disposed adjacent to said gear housing (14) wherein the support structure (66) is attached to said gear housing (14) and is slidingly engaged by the scroll collar (44).

20. The assembly of claim 19 wherein the tool is a reciprocating saw.

21. The assembly of claim 1 wherein said housing (14, 16) further comprising:
a motor housing (16);
a gear housing (14) ; and
a generally cylindrical member having an inner surface and an outer surface, said inner surface configured to slidingly contact the support structure (66) so that said cylindrical member can rotate around said support structure (66).

22. The assembly of claim 1 wherein said scroll collar (44) including a cylinder having an inner surface and an outer surface, and the housing further comprising:
a motor housing (16);
a gear housing (14) disposed adjacent to said motor housing (16) and the working end (12) disposed adjacent to said gear housing (14);
the support structure (66) attached to said gear housing (14) and configured to slidingly engage the inner surface of the cylinder.

## Patentansprüche

1. Hin und her bewegende Werkzeuganordnung, welche einen Drehgriff bereitstellt, mit:
einem Drehkragen (44);
einem hin und her bewegenden Werkzeug (10), welches ein Gehäuse (14, 16) und einen Arbeitsendabschnitt (12) aufweist, an welchem eine hin und her bewegende Werkzeugklinge befestigbar ist;
wobei die hin und her bewegende Werkzeuganordnung **gekennzeichnet ist durch**:
eine Auflagestruktur (66) an dem Gehäuse (14, 16), welche angrenzend zu dem Arbeitsendabschnitt (12) angeordnet ist; und
einen im Wesentlichen zylindrischen Drehkragen (44), welcher mittels der Auflagestruktur (66) gelagert und zum Rotieren relativ zu der Auflagestruktur (66) und der befestigten hin und her gehenden Werkzeugklinge um eine Drehkragenachse (52) ausgebildet ist.

2. Anordnung nach Anspruch 1, wobei das hin und her bewegende Werkzeug (10) eine Säge ist.

3. Anordnung nach Anspruch 1, wobei die Auflagestruktur (66) eine an dem Gehäuse (14, 16) befestigte Struktur mit einer im Wesentlichen umlaufenden Schnittstelle ist.

4. Anordnung nach Anspruch 3, wobei die Auflagestruktur (66) eine erste Kragenauflage (70) und eine zweite Kragenauflage (72) aufweist, welche sich jeweils in etwa über 180° erstrecken und eine Ansenkung zum Aufnehmen eines Befestigungselementes (92) aufweisen.

5. Anordnung nach Anspruch 1, welche ferner eine zwischen der Auflagestruktur (66) und dem Drehkragen (44) angeordnete Widerstandsstruktur aufweist.

6. Anordnung nach Anspruch 5, wobei die Widerstandsstruktur zumindest ein O-Ring ist.

7. Anordnung nach Anspruch 1, welche ferner eine angrenzend zu dem Drehkragen (44) angeordnete Halteeinrichtung (100) zum Halten des Drehkragens (44) auf der Auflagestruktur (66) aufweist.

8. Anordnung nach Anspruch 7, wobei die Halteeinrichtung (100) eine im Wesentlichen senkrecht zu der Achse des Drehkragens (44) befestigte Endplatte ist.

9. Anordnung nach Anspruch 1, wobei der Drehkragen (44) eine Basis zum Wirkverbinden mit der Auflagestruktur (66) und eine auf der Basis angeordnete Umspritzung aufweist.

10. Anordnung nach Anspruch 1, welche ferner zum Begrenzen einer Drehbewegung des Drehkragens (44) um die Achse des Drehkragens (44) eine Sperreinrichtung aufweist.

11. Anordnung nach Anspruch 10, wobei die Sperreinrichtung axial und verschieblich in einer Arretiereinrichtung auf dem hin und her bewegenden Werkzeug (10) angeordnet ist und einen vorderen Flansch aufweist.

12. Anordnung nach Anspruch 11, welche ferner zum Ausrichten des zumindest einen Aufnahmeschlitzes und des vorderen Flansches zueinander auf dem Kragen eine Markierung aufweist.

13. Anordnung nach Anspruch 1, wobei das Gehäuse (14, 16) ferner aufweist:
ein Motorgehäuse (16);
ein Getriebegehäuse (14); und
die Auflagestruktur (66), welche zum Befestigen an dem Getriebegehäuse (14) ausgebildet ist; und
den Drehkragen (44), welcher zum gleitenden Wirkeingriff mit der Auflagestruktur (66) ausgebildet ist.

14. Anordnung nach Anspruch 13, wobei die Auflagestruktur (66) eine im Wesentlichen umlaufende Schnittfläche aufweist.

15. Anordnung nach Anspruch 14, wobei die Auflagestruktur (66) eine erste Kragenauflage (70) und eine zweite Kragenauflage (72) aufweist, welche sich jeweils in etwa über 180° erstrecken und eine Ansenkung zum Aufnehmen eines Befestigungselementes (92) aufweisen.

16. Anordnung nach Anspruch 13, welche ferner eine zwischen der Auflagestruktur (66) und dem Drehkragen (44) angeordnete Widerstandsstruktur aufweist.

17. Anordnung nach Anspruch 13, welche ferner eine angrenzend zu dem Drehkragen (44) angeordnete Halteeinrichtung (100) zum Halten des Drehkragens (44) auf der Auflagestruktur (66) aufweist.

18. Anordnung nach Anspruch 13, wobei der Drehkragen (44) eine Basis zum Wirkverbinden mit der Auflagestruktur (66) und eine auf der Basis angeordnete Umspritzung aufweist.

19. Anordnung nach Anspruch 1, wobei das Gehäuse (14, 16) ferner aufweist:
ein Motorgehäuse (16);
ein Getriebegehäuse (14), welches angrenzend zu dem Motorgehäuse (16) angeordnet ist,
wobei der Arbeitsendabschnitt (12) angrenzend zu dem Getriebegehäuse (14) angeordnet ist,
wobei die Auflagestruktur (66) an dem Getriebegehäuse (14) befestigt und in gleitendem Wirkeingriff mit dem Drehkragen (44) ist.

20. Anordnung nach Anspruch 19, wobei das Werkzeug eine hin und her bewegende Säge ist.

21. Anordnung nach Anspruch 1, wobei das Gehäuse (14, 16) ferner aufweist:
ein Motorgehäuse (16);
ein Getriebegehäuse (14); und
ein im Wesentlichen zylindrisches Element mit einer inneren Oberfläche und einer äußeren Oberfläche, wobei die innere Oberfläche für einen gleitenden Kontakt mit der Auflagestruktur (66) ausgebildet ist, so dass das zylindrische Element um die Auflagestruktur (66) drehbar ist.

22. Anordnung nach Anspruch 1, wobei der Drehkragen (44) einen Zylinder mit einer inneren Oberfläche und einer äußeren Oberfläche aufweist, und wobei das Gehäuse ferner aufweist:
ein Motorgehäuse (16);
ein Getriebegehäuse (14), welches angrenzend zu dem Motorgehäuse (16) angeordnet ist,
wobei der Arbeitsendabschnitt (12) angrenzend zu dem Getriebegehäuse (14) angeordnet ist;
die Auflagestruktur (66), welche an dem Getriebegehäuse (14) befestigt und zum gleitenden Wirkeingriff mit der inneren Oberfläche des Zylinders ausgebildet ist.

## Revendications

1. Ensemble outil à mouvement alternatif doté d'une poignée tournante, comprenant :
- une bague de défilement (44) ;
- un outil à mouvement alternatif (10) présentant un logement (14, 16) et une extrémité de travail (12) à laquelle une lame d'outil à mouvement alternatif est fixée;
l'outil à mouvement alternatif étant **caractérisé par** :
une structure de support (66) sur ledit logement (14, 16) à proximité de ladite extrémité de travail (12) ; et
une bague de défilement (44) généralement cylindrique supportée par ladite structure de support (66) et conçue pour pivoter par rapport à ladite structure de support (66) et à la lame d'outil à mouvement alternatif fixée autour d'un axe de bague de défilement (52).

2. Ensemble selon la revendication 1, dans lequel l'outil à mouvement alternatif (10) est une scie.

3. Ensemble selon la revendication 1, dans lequel la structure de support (66) est une structure fixée audit logement (14, 16) ayant une interface généralement circulaire.

4. Ensemble selon la revendication 3, dans lequel la structure de support (66) présente un premier support de bague (70) and un second support de bague (72) s'entendant chacun approximativement à 180 degrés et comportant un contre-alésage permettant la réception d'un élément de fixation (92).

5. Ensemble selon la revendication 1, comprenant en outre une structure de résistance disposée entre ladite structure de support (66) et ladite bague de défilement (44).

6. Ensemble selon la revendication 5, dans lequel ladite structure de résistance est au moins un joint torique.

7. Ensemble selon la revendication 1, comprenant en outre un élément de retenue (100) situé à proximité de ladite bague de défilement (44) pour retenir ladite bague de défilement (44) sur ladite structure de support (66).

8. Ensemble selon la revendication 7, dans lequel ledit élément de retenue (100) est un flasque latéral fixé généralement perpendiculairement à l'axe de ladite bague de défilement (44).

9. Ensemble selon la revendication 1, dans lequel ladite bague de défilement (44) comprend une base permettant d'engager la structure de support (66) et un surmoule disposé sur ladite base.

10. Ensemble selon la revendication 1, comprenant en outre un élément de verrouillage permettant de limiter la rotation de la bague de défilement (44) autour de l'axe de la bague de défilement (44).

11. Ensemble selon la revendication 10, dans lequel ledit élément de verrouillage est disposé de manière axiale et coulissante dans un encliquetage sur l'outil à mouvement alternatif (10) et comprend une patte avant conçue pour être en prise avec au moins une fente de réception sur ladite bague.

12. Ensemble selon la revendication 11, comprenant en outre un repère sur ladite bague permettant d'aligner la au moins une fente de réception et ladite patte avant.

13. Ensemble selon la revendication 1, dans lequel ledit logement (14, 16) comprend en outre :
- un logement de moteur (16) ;
- un logement de transmission (14) ; et
- ladite structure de support (66) conçue pour la fixation au logement de transmission (14) ; et
- ladite bague de défilement (44) conçue pour s'appliquer de façon coulissante sur ladite structure de support (66).

14. Ensemble selon la revendication 13, dans lequel ladite structure de support (66) présente une interface généralement circulaire.

15. Ensemble selon la revendication 14, dans lequel ladite structure de support (66) présente un premier support de bague (70) et un second support de bague (72) s'étendant chacun approximativement à 180 degrés et comportant un contre-alésage permettant la réception d'un élément de fixation (92).

16. Ensemble selon la revendication 13, comprenant en outre une structure de résistance (94) disposée entre ladite structure de support (66) et ladite bague de défilement (44).

17. Ensemble selon la revendication 13, comprenant en outre un élément de retenue (100) situé à proximité de ladite bague de défilement (44) pour retenir ladite bague de défilement (44) sur ladite structure de support (66).

18. Ensemble selon la revendication 13, dans lequel ladite bague de défilement (44) comprend une base permettant d'engager la structure de support (66) et un surmoule disposé sur ladite base.

19. Ensemble selon la revendication 1, dans lequel ledit logement (14, 16) comprend en outre :
- un logement de moteur (16) ;
- un logement de transmission (14) disposé à proximité dudit logement de moteur (16) et de ladite extrémité de travail (12) disposée à proximité dudit logement de transmission (14), la structure de support (66) étant fixée audit logement de transmission (14) et étant mise en prise de façon coulissante avec la bague de défilement (44).

20. Ensemble selon la revendication 19, dans lequel l'outil est une scie alternative.

21. Ensemble selon la revendication 1, dans lequel ledit logement (14, 16) comprend en outre :
- un logement de moteur (16) ;
- un logement de transmission (14) ; et
- un élément généralement cylindrique présentant une surface intérieure et une surface extérieure, ladite surface intérieure étant conçue pour venir en contact de façon coulissante avec la structure de support (66) si bien que ledit élément cylindrique peut pivoter autour de ladite structure de support (66).

22. Ensemble selon la revendication 1, dans lequel ladite bague de défilement (44) comporte un cylindre doté d'une surface intérieure et d'une surface extérieure, et le logement comprend en outre :
- un logement de moteur (16) ;
- un logement de transmission (14) disposé à proximité dudit logement de moteur (16) et de ladite extrémité de travail (12) disposée à proximité dudit logement de transmission (14) ;
- la structure de support (66) fixée audit logement de transmission (44) et conçue pour s'appliquer de façon coulissante sur la surface intérieure du cylindre.
